# EUROPEAN PATENT APPLICATION

(11) **EP 0 799 763 A2**
(43) Date of publication of application: **08.10.1997**
(21) Application number: 97830138.0
(22) Date of filing: 25.03.1997
(51) Int. Cl.: B62M 27/00

(54) **Snow vehicle with pedal propulsion**

(30) Priority: 03.04.1996 IT BS960026
(71) Applicant: Corimba S.n.c. di Bettini Cesare & C., 25080 Nuvolento (Brescia) (IT)
(72) Inventor: Bettini, Cesare, 25085 Gavardo (Brescia) (IT); Bettini, Mauro, 25085 Gavardo (Brescia) (IT); Bettini, Luca, 25085 Gavardo (Brescia) (IT)
(74) Representative: Manzoni, Alessandro

(57) **Abstract**

This invention consists of a vehicle for snow and ice, with a frame like that of a bicycle, without a front wheel but with a rear traction wheel. A set of three skis (17 and 18) rests on the ground, with spring suspension devices (19 and 21) connecting individually the said skis (17 and 18) to said frame (10), one forward and two at the rear on either side of the traction wheel.

## Description

This invention proposes a new snow vehicle.

Generally, bicycles are used on uphill and downhill routes, including uneven terrain, possibly without asphalt. However, they are unusable when the ground is covered with snow or ice, because of the lack of grip that the wheels have on this surface, which hinders propulsion and makes it impossible to keep one's balance.

When the ground is covered in snow or ice, it can only be crossed on foot using skis, or with sleds or with the help of a traditional motorised snow vehicle.

The aim of this invention, therefore, is to provide a snow vehicle with human propulsion, using pedals.

A secondary aim of this invention is to propose a snow vehicle with the general structure and pedal propulsion of a bicycle, but equipped to rest more stably and slide over snow or ice-covered terrain.

A further aim of the invention is to propose a new snow vehicle which, thanks to its pedal propulsion, offers those who are unable to ski a chance to practise a snow sport.

A final aim of the invention is to propose a new snow vehicle that offers an original form of activity, a mixture of cycling and skiing, where able practitioners will be able to follow snow or ice-covered tracks.

The said aims can be achieved, in this invention, by a snow vehicle with the innovatory characteristics listed in the first revendication.

Specific details will become clearer by reading the following description and referring to the diagrams enclosed, where
Fig. 1 shows a perspective of the snow vehicle in this invention;
Fig. 2 shows a side view of the vehicle when at rest (continuous lines) and when in use (dotted lines);
Fig. 3 shows the view from above;
Fig. 4 shows a detail of the suspension of one of the skis.

The vehicle in question consists of a frame (10), which could be that of a bicycle or modified as preferred. The frame (10) supports a saddle (11), a handlebar (12) connected to a steering column or forward steering bracket (13), a rear traction wheel (14), a gear change (15) for the rear wheel (14) with the relative speed gear (16), and brakes for the rear wheel (14').

Three skis of appropriate length have been applied to the frame (10) and rest on the ground. One of these is a directional ski (17) and is fixed to the steering column or forward steering bracket (13), while the other two rear skis (18) are fixed either side of the rear wheel (14).

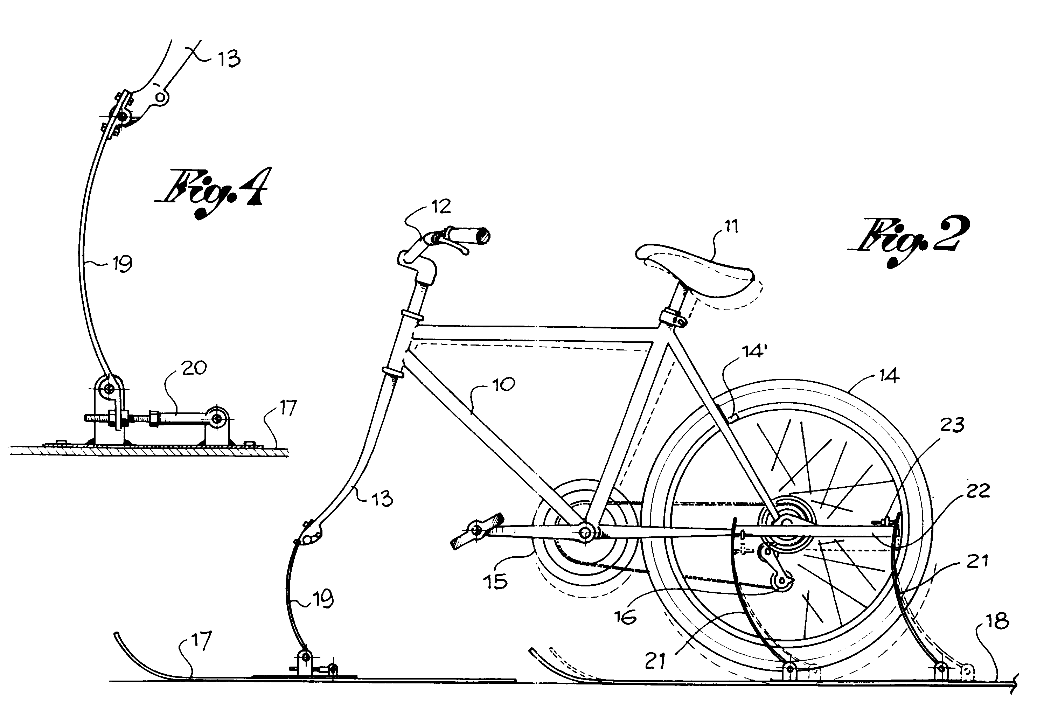

The directional ski (17) is connected to the steering column or forward steering bracket (13) by means of at least one leaf spring (19), which may have a preloading regulation device (20), for example, at the level of the ski. See Fig. 4.

Each rear ski (18) is fastened to the ends of two leaf springs (21), while the other ends are fixed to a rigid horizontal bar (22) attached to the frame (10).

Each of these leaf springs (21) may be equipped with a preloading regulation device (23), just like the leaf spring on the forward ski.

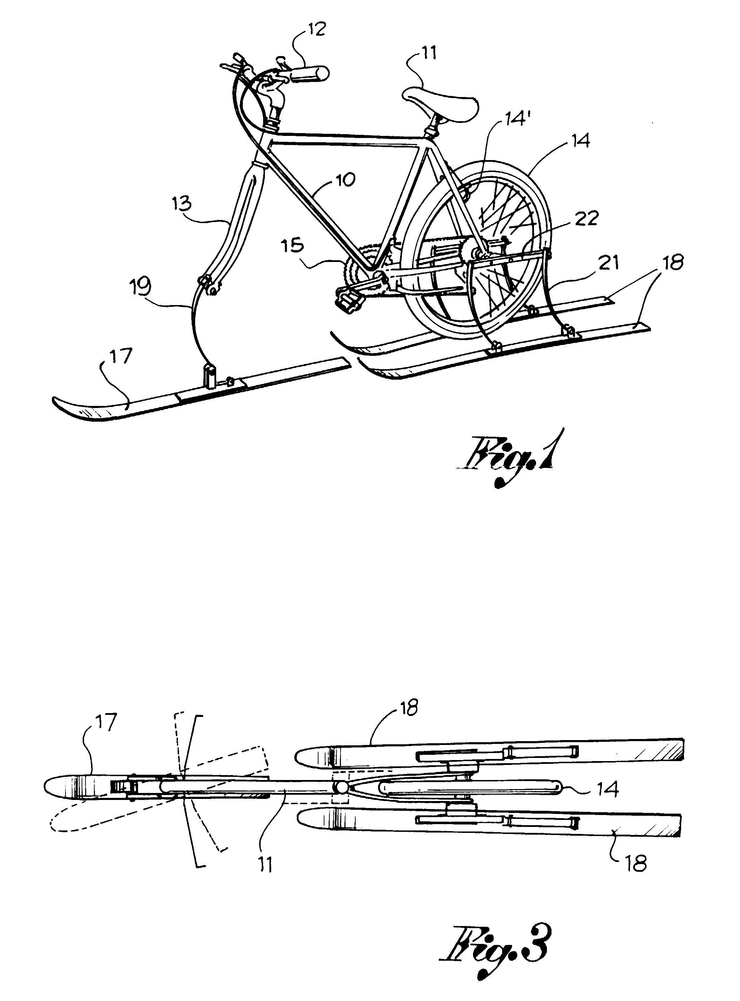

For the best use - see Fig. 3. - the rear skis (18) should be slightly converging in front and inclined inwards. The rear skis, at least, should be equipped, when necessary, with "stoppers" to provide the vehicle with an additional means of braking to that exerted on the wheel (14) by the usual brakes.

The skis (17 and 18) rest naturally on the ground, and the leaf springs (19 and 20) constitute a shock absorbing suspension between the frame (10) and the skis (17 and 18). The leaf springs (21) should be regulated in such a way that the rear wheel remains slightly above the plane of the skis (18) when the vehicle is not loaded, but rests on the ground to give adherence when the user climbs on. So, from the moment that the wheel touches the ground, all that is necessary is to pedal as if it were a bicycle and the vehicle will slide forward on the snow or ice, but with the possibility to drive or direct it by steering the front ski using the handlebars.

For a better grip, the traction wheel can be given a tyre with a deep tread. In this way, the vehicle will be able to tackle any terrain compatible with the ability and strength of the user, while still remaining perfectly stable. Thanks to the spring suspension, the skis will be able to follow the uneven terrain without transmitting the vibrations to the frame and user.

## Claims

1. The vehicle for snow and ice consists of:
- a frame (10) with a saddle, handlebars connected to a steering column or forward steering bracket (13), a rear traction wheel, a gear change for the rear wheel and a braking system for this rear wheel;
- a set of three skis (17 and 18), which rest on the ground;
- means of spring suspension (19 and 21), connected individually to said skis (17 and 18) and said frame (10), the vehicle sliding forward on the skis when a force of propulsion is applied to the pedals which control said rear wheel, and being guided by said handlebars.

2. A vehicle for snow and ice, as described in revendication 1, in which the set of three skis consists of one forward directional ski (17) connected to the steering column or forward steering bracket (13) and a pair of rear skis (18) fixed to the frame at the level of the rear traction wheel and on either side of it.

3. A vehicle for snow and ice, as described in revendication 2, in which the forward directional ski (17) is connected to the steering column or forward steering bracket (13) by means of at least one leaf spring or suspension spring (19) and in which each rear ski (18) is held to the frame by at least two leaf springs or suspension springs (21), each ski being independent of the other.

4. A vehicle for snow, as described in revendication 3, in which each of the said leaf springs or suspension springs has its own preloading regulation device.

5. A vehicle for snow and ice, as described in any revendication from 2 to 5, in which the rear skis are slightly converging and inclined inwards.

6. A vehicle for snow and ice, as described in any preceding revendication, in which the traction wheel rests on the ground when the vehicle is in use.
